(19) Europäisches Patentamt
European Patent Office
Office européen des brevets

(11) **EP 4 589 548 A1**

(12) **EUROPEAN PATENT APPLICATION**

(43) Date of publication:
**23.07.2025   Bulletin 2025/30**

(21) Application number: **24000009.1**

(22) Date of filing: **17.01.2024**

(51) International Patent Classification (IPC):
**G06V 10/22** (2022.01)      **G06V 10/774** (2022.01)
**G06V 10/778** (2022.01)     **G06V 10/94** (2022.01)
**G06V 20/10** (2022.01)      **G06V 20/64** (2022.01)
**G06V 20/70** (2022.01)      **G06F 3/048** (2013.01)
**G06T 7/11** (2017.01)

(52) Cooperative Patent Classification (CPC):
**G06V 10/235; G06F 3/04842; G06F 3/04845;
G06T 7/11; G06V 10/774; G06V 10/7788;
G06V 10/945; G06V 20/10; G06V 20/64;
G06V 20/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **DeepScenario GmbH
70565 Stuttgart (DE)**

(72) Inventors:
• BANZHAF, Holger
  70565 Stuttgart (DE)
• KAISER, Jacques
  70565 Stuttgart (DE)

(74) Representative: **Legl, Stefan
LLM IP Patentanwaltskanzlei
Stollstraße 26
85053 Ingolstadt (DE)**

(54) **METHOD AND SYSTEM FOR OBJECT ANNOTATION**

(57)      The present disclosure relates to a computer-implemented method for object annotation. The method includes receiving input data, wherein the input data include two-dimensional image data indicating at least one object in a scene; outputting, based on the two-dimensional image data, at least one representation of the scene on a user interface; receiving at least one user input, wherein the at least one user input indicates at least one three-dimensional bounding box annotating the at least one object in the scene; determining a three-dimensional position and rotation of the at least one three-dimensional bounding box based on the user input and a three-dimensional reconstruction relating to the scene; and generating labeled data based on the at least one user input, wherein the labeled data include information about the at least one three-dimensional bounding box annotating the at least one object in the scene.

Fig. 2

200

receiving input data, wherein the input data include two-dimensional image data indicating at least one object in a scene — 210

outputting, based on the two-dimensional image data, at least one representation of the scene on a user interface — 220

receiving at least one user input, wherein the at least one user input indicates at least one three-dimensional bounding box annotating the at least one object in the scene — 230

determining a three-dimensional rotation and position of the at least one three-dimensional bounding box based on the user input and a three-dimensional reconstruction relating to the scene — 240

generating labelled data based on the at least one user input, wherein the labelled data include information about the at least one three-dimensional bounding box annotating the at least one object in the scene — 250

EP 4 589 548 A1

## Description

### FIELD

Embodiments of the present disclosure relate to a computer-implemented method for object annotation, a computer program including instructions for carrying out the method, a computer-readable storage medium including instructions for carrying out the method, and a data processing system for object annotation. More particularly, the present disclosure relates to a tool for annotating 3D bounding boxes in 2D images.

### BACKGROUND

In a digital world, where everything is driven by data, it is important to understand how people, goods, etc. move through space and time. For this purpose, sensor systems such as radar, LiDAR, cameras or infrared can be combined with algorithms to detect objects and track their motion as they move from A to B.

When developing algorithms for object detection and tracking, so-called ground truth data is required, which unambiguously describes which object is involved and the - exact pose and dimension of the object. In sensor data, this is typically achieved with an object marker, also known as a "bounding box". A bounding box is a simple geometry that completely encloses the geometry of the object. It can be defined in two dimensions (over image pixels) or three dimensions (in Cartesian space). The ground truth object marker is generally created by manually annotating the object with the object marker, known as "labeling". Manual labeling can be carried out either by an expert or a non-expert. A label therefore contains the depicted object and is defined by the Cartesian image coordinates of the bounding box that surrounds the object.

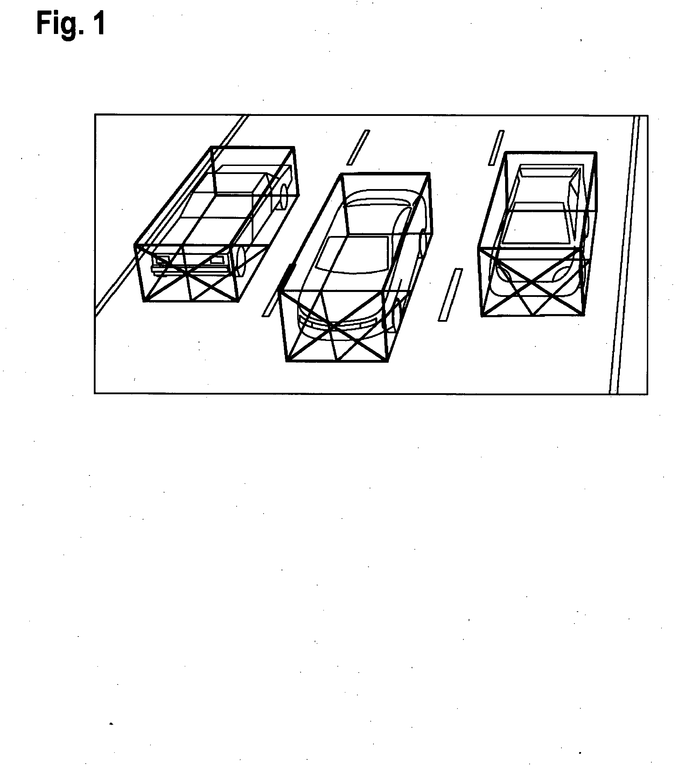

A bounding box encloses the object, for example as a rectangle or cuboid, and can be enriched with additional information, such as an object class or attributes of the object. 3D bounding box labels are also frequently used for radar and LiDAR data and include depth information about the object, i.e. its metric distance from the sensor. For technical applications, it is key to (1) estimate the 3D position and 3D orientation of all objects in the scene, (2) estimate the size of their bounding box (length, width, height), (3) estimate the correct category of each object (e.g., car, bicycle, etc.), and (4) assign a consistent track ID to all objects in the scene. This is, for example, shown in FIG. 1 and often referred to as 3D detection and tracking.

Nowadays, ground truth bounding boxes are drawn almost always manually. In order to achieve a high quality, typically one person labels the objects and a second person does a quality check and maybe slight corrections. This process requires a great deal of manual effort and is very time intensive.

## SUMMARY

In light of the above, a computer-implemented method for object annotation, a computer program including instructions for carrying out the method, a computer-readable storage medium including instructions for carrying out the method, and a data processing system for object annotation are provided.

It is an object of the present disclosure to provide an efficient labeling technique. It is another object of the present disclosure to improve object detection and tracking in technical applications such as autonomous driving, traffic monitoring, or smart parking.

The objects are solved by the features of the independent claims. Preferred embodiments are defined in the dependent claims.

According to an independent aspect of the present disclosure, a computer-implemented method for object annotation is provided. The method includes receiving input data, wherein the input data include two-dimensional image data indicating at least one object in a scene; outputting, based on the two-dimensional image data, at least one representation of the scene on a user interface; receiving at least one user input, wherein the at least one user input indicates at least one three-dimensional bounding box annotating the at least one object in the scene; determining (e.g., calculating) a three-dimensional position and/or rotation of the at least one three-dimensional bounding box based on the user input and a three-dimensional reconstruction relating to the scene; and generating labeled data based on the at least one user input, wherein the labeled data include information about the at least one three-dimensional bounding box annotating the at least one object in the scene.

According to some embodiments, which can be combined with other embodiments described herein, the labeled data are configured as training data and/or evaluation data for object detection and tracking applications.

According to some embodiments, which can be combined with other embodiments described herein, the labeled data are configured as training data and/or evaluation data for computer vision algorithms.

Preferably, the computer vision algorithms include one or more neural networks. A neural network is based on a collection of connected nodes. A node that receives a signal processes the signal and can signal neurons connected to it. Typically, nodes are aggregated into layers. Different layers may perform different transformations on their inputs. Signals travel from an input layer to an output layer. Such a neural network may be trained by processing examples, each of which contains a known input and result, forming probability-weighted associations between the two, which are stored within the data structure of the neural network. Thus, the neural network learns to perform tasks by considering examples.

Preferably, the computer vision algorithms are trained using machine learning techniques. The term "machine learning" as used throughout the present application refers to an algorithm that builds a model based on training data, in order to make predictions or decisions without being explicitly programmed to do so.

According to some embodiments, which can be combined with other embodiments described herein, the three-dimensional reconstruction includes, or is, a three-dimensional surface reconstruction of the scene or a three-dimensional surface reconstruction of a ground of the scene.

According to some embodiments, which can be combined with other embodiments described herein, the three-dimensional reconstruction relating to the scene models a static environment in which the at least one object is not included.

According to some embodiments, which can be combined with other embodiments described herein, the input data further include first camera information about at least one camera recording the two-dimensional image data. For example, the first camera information may include a focal length and/or a principal point of the at least one camera.

According to some embodiments, which can be combined with other embodiments described herein, the input data further include second camera information about the at least one camera recording the two-dimensional image data. For example, the second camera information may include a six-dimensional pose of the at least one camera in the scene.

According to some embodiments, which can be combined with other embodiments described herein, the input data further include third camera information about the at least one camera recording the two-dimensional image data. For example, the third camera information may include distortion information.

According to some embodiments, which can be combined with other embodiments described herein, the method further includes estimating at least one initial three-dimensional bounding box using an algorithm, in particular wherein the at least one user input is related to the at least one initial three-dimensional bounding box.

According to some embodiments, which can be combined with other embodiments described herein, the at least one user input includes a first coordinate and a second coordinate, particularly x- and y-coordinates, of the three-dimensional position of the three-dimensional bounding box.

According to some embodiments, which can be combined with other embodiments described herein, the method further includes, if the object moves on the ground, automatically calculating a third coordinate, particularly a z-coordinate, based on the first and second coordinates and the three-dimensional reconstruction.

According to some embodiments, which can be combined with other embodiments described herein, if the object does not move on the ground, the at least one user input includes a third coordinate, particularly z-coordinate, of the three-dimensional position of the three-dimensional bounding box.

According to some embodiments, which can be combined with other embodiments described herein, if the object moves on the ground, the at least one user input indicates a rotation of the at least one object about an axis, and wherein the method further includes automatically calculating a three-dimensional rotation of the at least one object based on the rotation of the at least one object about the axis and the three-dimensional reconstruction.

According to some embodiments, which can be combined with other embodiments described herein, if the object does not move on the ground, the at least one user input indicates a three-dimensional rotation of the at least one object.

According to some embodiments, which can be combined with other embodiments described herein, the at least one user input further includes one or more attributes related to the at least one object.

According to some embodiments, which can be combined with other embodiments described herein, the at least one user input further includes masking regions of the scene that do not need to be labeled.

According to some embodiments, which can be combined with other embodiments described herein, the two-dimensional image data include a sequence of multiple frames of the scene.

According to some embodiments, which can be combined with other embodiments described herein, outputting at least one representation of the scene on a user interface includes outputting at least one representation of a basic frame of the multiple frames using the user interface, wherein the at least one user input indicates at least one three-dimensional bounding box annotating the at least one object in the basic frame of the multiple frames; determining at least one tracking point on the at least one three-dimensional bounding box; and tracking the at least one tracking point across other frames of the multiple frames to determine three-dimensional bounding boxes in the other frames.

According to some embodiments, which can be combined with other embodiments described herein, the at least one representation of the scene outputted on the user interface includes a first view related to the scene, wherein the first view is configured to indicate the at least one three-dimensional bounding box in Cartesian space, particularly wherein the first view is a bird's eye view or a three-dimensional view.

According to some embodiments, which can be combined with other embodiments described herein, the at least one representation of the scene outputted on the user interface includes a second view related to the scene, wherein the second view includes an image of the scene, particularly a two-dimensional image.

According to some embodiments, which can be combined with other embodiments described herein, the first view and the second view are chained.

Preferably, the first view and the second view are chained through a camera pinhole model.

According to some embodiments, which can be combined with other embodiments described herein, the at least one user input relates to a zoom and/or panning in the first view and/or the second view.

According to some embodiments, which can be combined with other embodiments described herein, the at least one user input indicating the at least one three-dimensional bounding box annotating the at least one object is received on the first view and/or the second view.

According to some embodiments, which can be combined with other embodiments described herein, the at least one user input indicating the at least one three-dimensional bounding box annotating the at least one object is received on a control panel separate from the first view and the second view.

According to some embodiments, which can be combined with other embodiments described herein, the method further includes performing one or more quality checks on the labeled data, such as checking whether an out-of-distribution dimension is assigned to the at least one object and optionally outputting a warning an out-of-distribution dimension is assigned to the at least one object.

According to another independent aspect of the present disclosure, a computer program is provided. The computer program has instructions which, when the program is executed by a computer, cause the computer to carry out the method for object annotation according to the embodiments described in this document.

According to another independent aspect of the present disclosure, a computer-readable storage medium is provided. The computer-readable storage medium has instructions which, when the program is executed by a computer, cause the computer to carry out the method for object annotation according to the embodiments described in this document.

According to some embodiments, which can be combined with other embodiments described herein, the computer-readable storage medium is a non-transitory computer-readable storage (or memory) medium. The term "non-transitory computer-readable storage (or memory) medium" includes, but is not limited to, magnetic or optical media, e.g., disks, hard drives, or DVDs/CD-ROMs, volatile or non-volatile media such as RAM (e.g., SDRAM, DDR, RDRAM, SRAM, etc.), ROM, etc. The non-transitory computer-readable storage (or memory) medium may include other types of non-transitory memory as well or combinations thereof.

According to another independent aspect of the present disclosure, a data processing system for object annotation is provided. The data processing system includes one or more processors configured to receive input data, wherein the input data include two-dimensional image data indicating at least one object in a scene; output, based on the two-dimensional image data, at least one representation of the scene on a user interface; receive at least one user input, wherein the at least one user input indicates at least one three-dimensional bounding box annotating the at least one object in the scene; determine (e.g., calculate) a three-dimensional position and/or rotation of the at least one three-dimensional bounding box based on the user input and a three-dimensional reconstruction relating to the scene; and generate labeled data based on the at least one user input, wherein the labeled data include information about the at least one three-dimensional bounding box annotating the at least one object in the scene.

According to some embodiments, which can be combined with other embodiments described herein, the one or more processors of the data processing system are configured to perform the computer-implemented method for object annotation according to the embodiments described in this document.

Embodiments are also directed at systems for carrying out the disclosed methods and include system aspects for performing each described method aspect. These method aspects may be performed by way of hardware components, a computer programmed by appropriate software, by any combination of the two or in any other manner. Furthermore, embodiments according to the invention are also directed at methods for operating the described system. It includes method aspects for carrying out every function of the system.

## BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:

FIG. 1 shows a schematic view of 3D bounding boxes annotating objects;

FIG. 2 shows a flow chart of a computer-implemented method for object annotation according to embodiments described herein;

FIG. 3 shows a schematic view of 3D bounding boxes annotating objects;

FIG. 4A shows a visualization of a 3D surface reconstruction of an entire scene;

FIG. 4B shows a visualization of a 3D surface reconstruction of the ground of a highway;

FIGs. 5A and 5B show a user interface according to embodiments described herein;

FIG. 6          shows a 3D surface reconstruction as a triangle mesh; and

FIG. 7          shows a user interface according to further embodiments described herein.

## DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

This document includes references to "one embodiment" or "an embodiment". The appearances of the phrases "in one embodiment" or "in an embodiment" do not necessarily refer to the same embodiment. Particular features, structures, or characteristics may be combined in any suitable manner consistent with this disclosure.

The term "comprising" is open-ended. As used in the appended claims, this term does not foreclose additional structure or steps.

Various units, circuits, or other components may be described or claimed as "configured to" perform a task or tasks. In such contexts, "configured to" is used to connote structure by indicating that the units/circuits/-components include structure (e.g., circuitry) that performs those task or tasks during operation. As such, the unit/circuit/component can be said to be configured to perform the task even when the specified unit/circuit/-component is not currently operational (e.g., is not on). The units/circuits/components used with the "configured to" language include hardware for example, circuits, memory storing program instructions executable to implement the operation, etc. Additionally, "configured to" can include generic structure (e.g., generic circuitry) that is manipulated by software and/or firmware (e.g., an FPGA or a general-purpose processor executing software) to operate in manner that is capable of performing the task(s) at issue.

As used herein, the terms "first", "second", etc. are used as labels for nouns that they precede, and do not imply any type of ordering (e.g., spatial, temporal, logical, etc.).

As used herein, the term "based on" is used to describe one or more factors that affect a determination. This term does not foreclose additional factors that may affect a determination. That is, a determination may be solely based on those factors or based, at least in part, on those factors. Consider the phrase "determine A based on B." While in this case, B is a factor that affects the determination of A, such a phrase does not foreclose the determination of A from also being based on C. In other instances, A may be determined based solely on B.

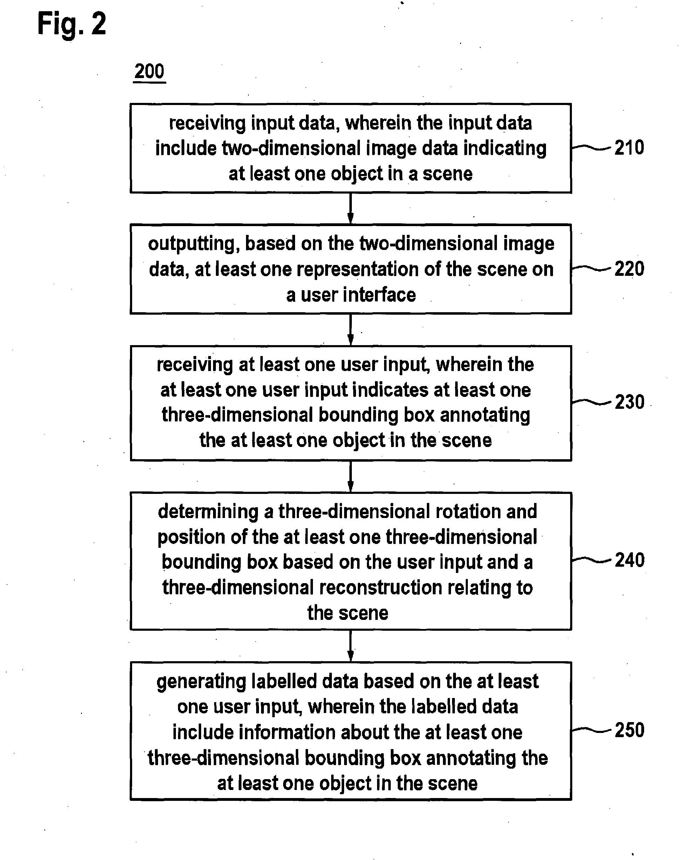

FIG. 2 shows a flow chart of a computer-implemented method 200 for object annotation according to embodiments described herein. The method 200 can be conducted by means of computer programs, software, computer software products and the interrelated controllers, which can have a CPU (and/or GPU), a memory, a user interface, and input and output means being in communication with the corresponding components of a system.

The method 200 includes in block 210 receiving input data, wherein the input data include two-dimensional image data indicating at least one object in a scene; in block 220 outputting, based on the two-dimensional image data, at least one representation of the scene on a user interface; in block 230 receiving at least one user input, wherein the at least one user input indicates at least one three-dimensional bounding box annotating the at least one object in the scene; in block 240 determining (e.g., calculating) a three-dimensional position and/or rotation of the at least one three-dimensional bounding box based on the user input and a three-dimensional reconstruction relating to the scene; and in block 250 generating labeled data based on the at least one user input, wherein the labeled data include information about the at least one three-dimensional bounding box annotating the at least one object in the scene.

The object annotation of the present disclosure is done by referencing the 2D image in a 3D (surface) reconstruction of the scene allowing to place a 3D bounding box in the 3D reconstruction and seeing the projected result in the 2D image. The method 200 therefore allows to annotate arbitrary objects with metric 3D bounding boxes when only a monocular 2D image and no point cloud nor depth measurement is available. Furthermore, it is possible to annotate the 3D position and 3D rotation of the 3D bounding box when the object moves on an arbitrary ground surface. The annotations can then be used to train and evaluate computer vision algorithms, such as neural networks, on 3D object detection and tracking tasks. The latter is essential for various applications such as autonomous driving, traffic monitoring, or smart parking.

Compared to other methods for generating 3D bounding boxes, the method 200 provides one or more of the following benefits:

- Simplicity of the sensor setup as only a monocular camera and a 3D reconstruction of the scene is needed for labeling. The latter can be generated using, e.g., the same monocular camera combined with structure from motion or SLAM, or directly retrieved from a satellite data provider (e.g., Google Earth). Simple sensor setups allow to reduce cost, speed up the system setup, and increase the scalability of the solution.

- Avoidance of a second sensor in the scene for measuring depth. This also reduces the cost of the overall system and the need for a complex sensor-to-sensor calibration, such as camera to LiDAR calibration. It also saves disk memory as a depth sensor typically generates large data amounts.

- Various options in the labeling tool itself that allow to increase the labeling speed of an annotator resulting in more labels per hour and thus in a higher efficiency and reduction of labeling cost.

- Various options in the labeling tool itself that ensure a high quality of the created annotations.

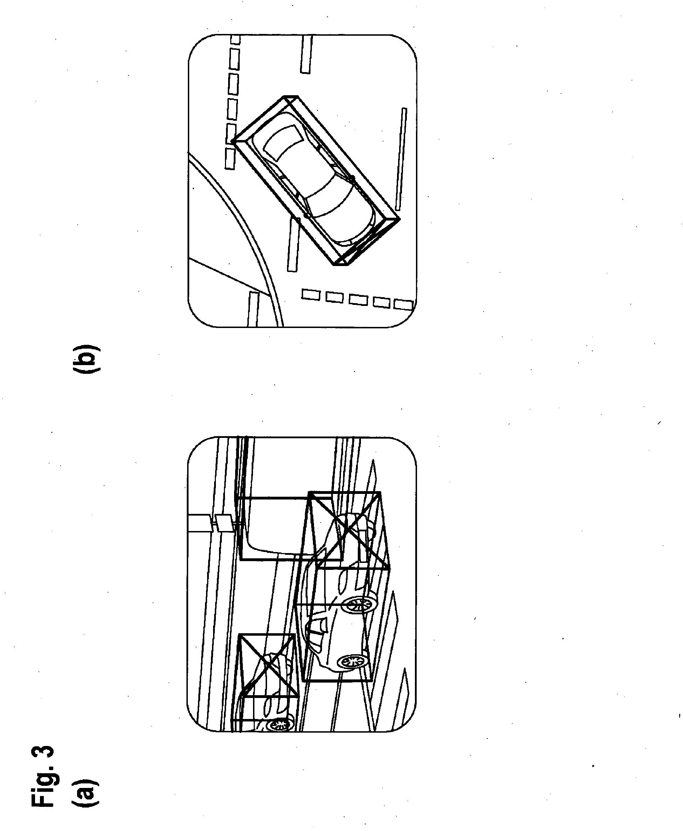

FIG. 3 shows real-world examples where cars are annotated with 3D bounding boxes in an image of a monocular traffic camera (FIG. 3(a)) and a drone (FIG. 3(b)) using the method described in this document.

A 3D bounding box is generally understood as a 3D box which encloses the object entirely. Optionally, the 3D bounding box can be provided with additional information, such as an object class or an attribute of the object.

The following will provide a detailed description of an exemplary and nonlimiting embodiment of the labeling tool of the present disclosure.

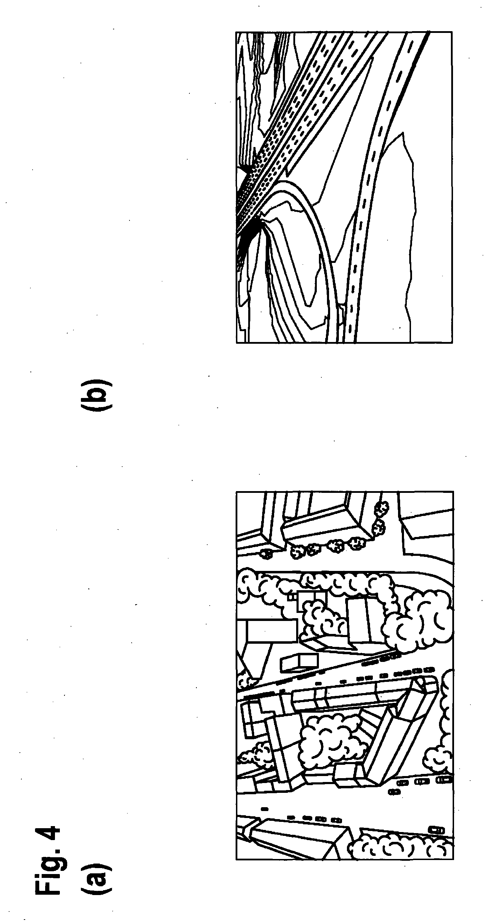

Input to the labeling tool is one or a sequence of undistorted images (or distorted images, if the distortion coefficients are provided) and the intrinsics of the camera (e.g. the focal length and the principal point), the extrinsics of the camera (i.e. its 6D pose in the scene), and a 3D surface reconstruction of the entire scene or at least of the ground, FIG. 4 shows a visualization of a 3D surface reconstruction of an entire scene (FIG. 4(a)) and of the ground of a highway (FIG. 4(b)). The 3D surface reconstruction can be encoded, for example, as a textured triangle mesh.

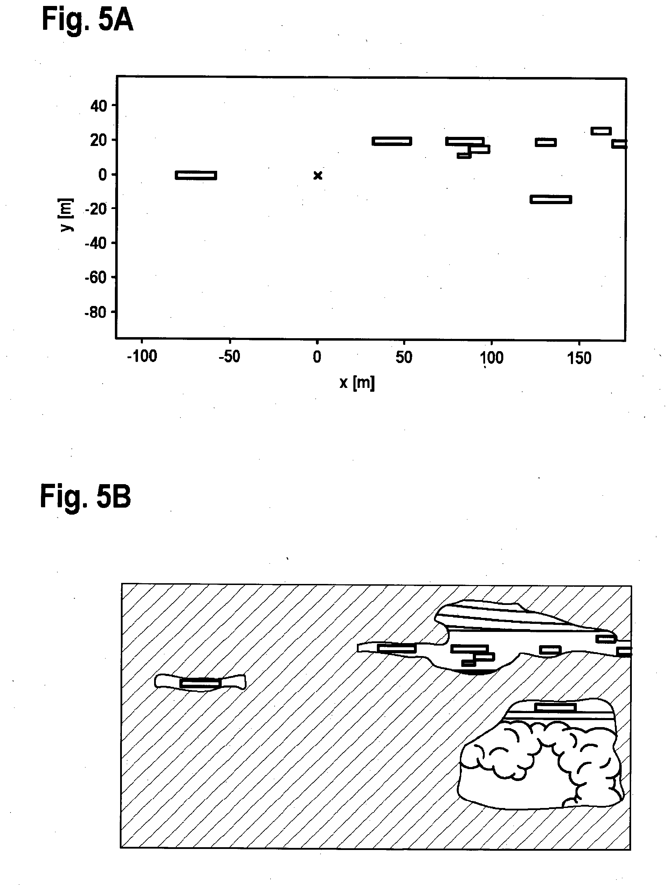

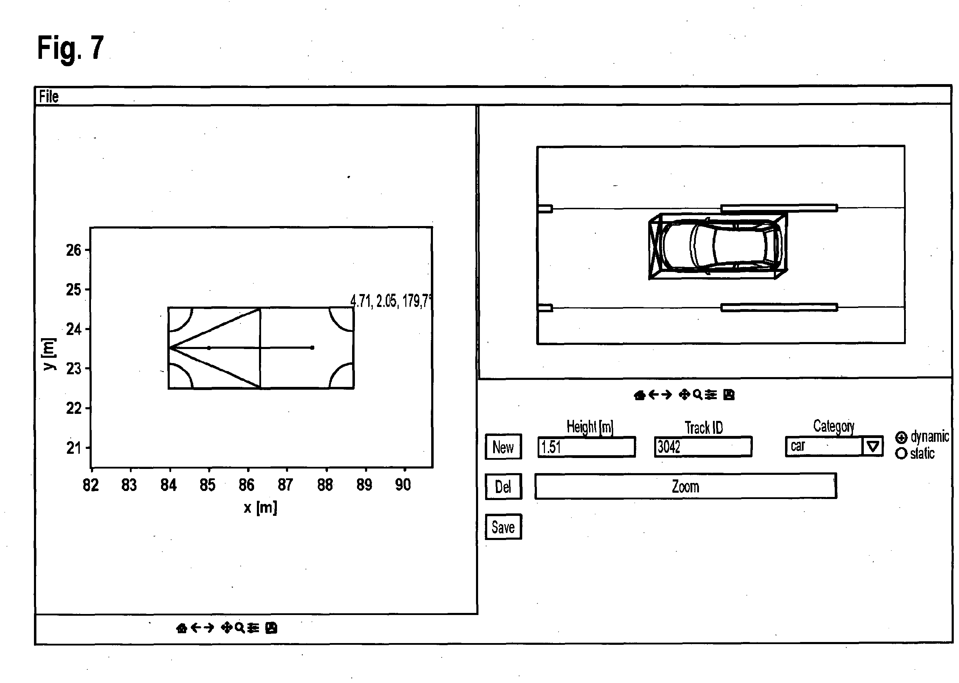

Starting the labeling tool with these inputs opens up a graphical user interface (GUI) that allows a human annotator to label the objects in the scene with a 3D bounding box. An example of the tool's main window is shown in FIGs. 5A and B. FIG. 5A shows the annotated objects in Cartesian space ("world view"), and FIG. 5B shows the annotated 3D bounding boxes projected into the image ("camera view"). In some embodiments, the world view and the camera view are displayed on the same screen of the GUI, optionally together with a control panel having buttons that allow the user to interact with the tool and the labels (see also FIG. 7).

For simplicity and without loss of generalization, the world view in FIG. 5A shows the scene from a bird's eye view. It would also be possible to visualize the world view in 3D and add the 3D surface reconstruction to it.

In order to project an object (or more precisely all vertices of its 3D bounding box) from world view to camera view, the standard pinhole camera model can be used, which is given by the following equation:

$$d \begin{bmatrix} u \\ v \\ 1 \end{bmatrix} = K \begin{bmatrix} R & t \end{bmatrix} \begin{bmatrix} x \\ y \\ z \\ 1 \end{bmatrix}$$

where $(x, y, z)$ denotes the 3D position of a point in world view [meter], $K$ the intrinsic matrix, $(R, t)$ the extrinsic matrix, , $d$ the depth [meter], and $(u, v)$ the corresponding coordinates of that point in the image [pixel]. Thus, the pinhole camera model allows to manipulate a 3D bounding box in world view and directly see the corresponding result in the image (camera view).

## Initializing the scene

Labeling can either be started from scratch, or with a warm start by asking, e.g., a neural network to estimate the 3D bounding boxes of all objects in the scene. The latter is beneficial to increase the efficiency of the labeling process.

## Creating/deleting objects

The world view allows to create and delete objects in the scene through a user input (button, keyboard shortcut, or mouse).

## 3D position computation

The position of a 3D bounding box is uniquely defined by the $(x, y, z)$-coordinates of its bottom center. For objects that move on the ground, it is sufficient to annotate the xy-coordinates of the bottom center and automatically derive its z-component from the ground. The latter can be achieved by intersecting a ray in z-direction with the 3D surface reconstruction of the scene.

In order to manipulate an object's xy-position, the user can either drag and drop the object in world view or use keyboard shortcuts for high-precision positioning.

In the case that an object does not move on the ground, e.g., a bird or a drone, the user can detach that object from the ground and freely position it in the 3D reconstruction. To position the object in this case, the user must either fix the dimension of the object to some estimated/known value or guess its depth due to the ambiguity between dimension and depth in monocular images.

## 3D rotation computation

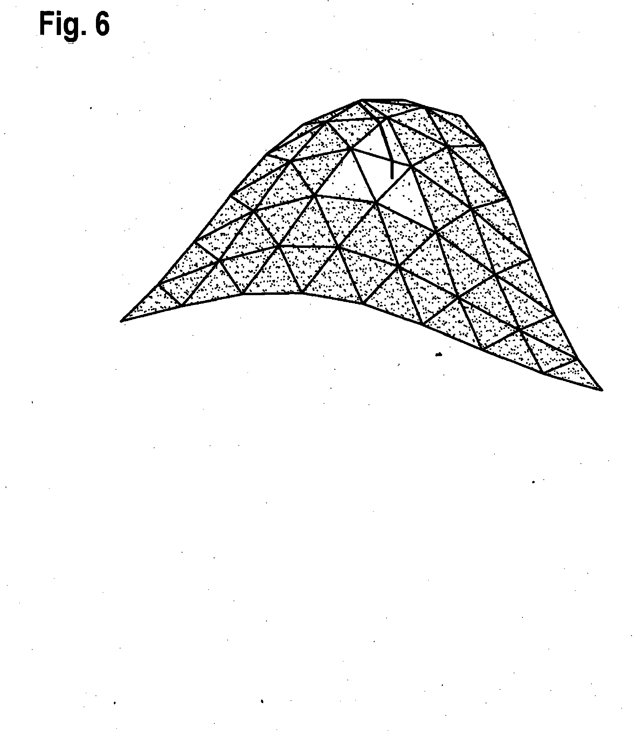

For objects that move on the ground, their 3D rotation (roll, pitch, yaw) is constrained and has only one degree of freedom. As it can be seen in FIG. 6, each point of the object's path lies on an element of the given 3D surface reconstruction. Querying the normal vector of the corresponding elements and asking the user to input the rotation of the object about, e.g., the z-axis of the world view, allows to derive the full 3D rotation of the bounding box.

The user can, for instance, adjust the rotation angle to the desired value via keyboard inputs or by clicking e.g. on one of the knobs on the corners of the bounding box in world view, see FIG. 7. The current yaw angle of the object is printed as the third digit at the top right corner of the bounding box, see FIG. 7.

In the case that an object does not move on the ground, the user can input all three rotation angles (yaw, pitch, roll) manually via the keyboard or the mouse.

## Dimension assignment

The length, width, and height of the object can be adjusted via keyboard inputs or by clicking e.g. on one of the knobs on the corners of the bounding box in world view, see FIG. 7. The current length and width are printed as the first two digits at the top right corner of the bounding box in world view. The height of the bounding box is printed in the control panel on the bottom right of the labeling tool, see FIG. 7.

From previous labeling iterations, the labeling tool also knows the distribution over dimensions for each category, e.g., represented by a Gaussian. With this knowledge, a warning can be raised when the user assigns an out-of-distribution dimension to an object. This mechanism helps to keep a high quality of the manual annotations.

In some embodiments, these distributions can be used to spawn new objects with the average dimension of the selected category, which helps to speed up the labeling process.

## Assignment of other attributes

Apart from the geometric properties like 3D position, 3D rotation and dimension, each object can be labeled with additional attributes, e.g., its category, track ID, if it is parked or moving, etc.

## Labeling consecutive frames

In order to train a neural network on both, the detection and tracking task, sequences of images have to be labeled. In this case, an automated multi-stage approach can be applied to reduce the labeling effort: (1) one can ask the human annotator to label an arbitrary frame, the so-called basic frame, of the sequence of images, (2) one can project the bottom center of the bounding box to image space using the pinhole camera model, (3) one can use a conventional or machine-learned image tracker to track that image point through the sequence of images. If the object moves on the ground, a ray can be casted through the image point, and intersected with the 3D surface reconstruction to compute the 3D position of the object. If the object does not move on the ground, its depth can be assumed to stay constant such that its Cartesian position can be computed using the pinhole camera model. All other properties of the object can, for example, be assumed to stay constant over the sequence.

Once these automated steps are completed, the human annotator is asked to check all objects in the entire sequence and only adjust the labels which were not correctly annotated in the automated step before. As a result, this automation helps the human annotator to reduce labeling effort significantly. As it can be seen in FIG. 7 on the left, one can also visualize the path of the object in world view such that the human annotator can always check the consistency of the annotated motion.

## Zooming and Panning

As it can be seen in FIGs. 5A and B, a zooming functionality is beneficial to precisely annotate all objects. The user can be allowed to either zoom into the world view or into the camera view by selecting a zoom region with the mouse in one of the views.

If the user zooms into the world view, the following steps are applied to compute the corresponding zoom region in camera view: (1) take the four xy-values of the corners of the input zoom region, (2) intersect a vertical ray with the 3D surface reconstruction to retrieve the corresponding z-values, (3) use the pinhole camera model to project the four 3D points to image space, (4) use the minimax values of the projected image points to derive the zoom region in camera view. The same procedure is applied if the user applies panning in world view.

If the user zooms into the camera view, the following steps are applied to compute the corresponding zoom region in world view: (1) take the four uv-values of the corners of the input zoom region, (2) cast a ray through these image points, and intersect them with the 3D surface reconstruction, (3) take the resulting 3D points and retrieve the min/max xy-values to end up with the zoom region in world view. The same procedure is applied if the user applies panning in camera view.

This description assumes that the world view is visualized from a bird's-eye-view perspective as in FIG. 7. An extension to a 3D visualization of the world view is also possible.

The labeling tool also offers the possibility to quickly iterate through all labels via a keyboard shortcut, and by doing so, zoom in on every object in the scene, see FIG. 7. This can be used, e.g., to ensure quickly that all objects are annotated properly. In order to obtain the appropriate zoom regions in world view and camera view, the following steps can be conducted: (1) take the eight corners of the 3D bounding box and add a zoom margin to every side of the box, (2) take the min/max xy-values of these eight points to end up with the zoom region in world view, (3) use a pinhole camera model to also project these eight 3D points to image space, and (4) use the min/max values of the projected image points to derive the zoom region in camera view.

## Masking regions

It is sometimes beneficial to only label the regions in the image where the downstream neural network faces challenges in detection and tracking of the objects. For this purpose, a lasso tool is implemented that allows the user to mask certain regions in the image that do not need to be labeled (see FIG. 5B on the top right). This masking procedure allows to speed up the labeling process significantly.

The created mask in one frame can also be applied to subsequent frames in order to reduce the labeling effort throughout the entire sequence.

## Final quality checks

Once the human annotator is done with labeling, a list of automated quality checks can be triggered. This allows to reduce labeling errors and increase the quality of the labels. The checks, for example, validate that all attributes are set for each label in the scene, that each frame was labeled, or that annotated tracks do not show any outliers, e.g., the path is smooth, the volume and the rotation angles of the 3D bounding box do not change abruptly, etc.

## Area of application

The labeling tool and the resulting 3D annotations are suitable to train and evaluate 3D computer vision algorithms in a wide range of industries:

- Automotive and Mobile Robotics: Autonomous vehicles, Advanced Driver Assistance Systems (ADAS), and mobile robots use monocular cameras to perceive their environment. In order to train and evaluate their 3D detection and tracking algorithms, annotated 3D bounding boxes are needed.

- Transportation: Today, monocular cameras are often used to monitor traffic or to digitalize parking lots. Computer vision algorithms are used in this context to automate the analysis of the captured video streams or to build smart applications like real-time monitoring of parking lot utilization.

- Logistics: Computer vision algorithms are used to understand the flow of goods or to determine the exact 6D pose of an object, e.g., for a gripper in a production process.

- Other industries in which object detection and tracking plays an important role include retail, security, sports, etc.

The methods described herein may be implemented in software, hardware, or a combination thereof, in different embodiments. In addition, the order of the blocks of the methods may be changed, and various elements may be added, reordered, combined, omitted, modified, etc. Various modifications and changes may be made as would be obvious to a person skilled in the art having the benefit of this disclosure. The various embodiments described herein are meant to be illustrative and not limiting. Many variations, modifications, additions, and improvements are possible. Accordingly, plural instances may be provided for components described herein as a single instance. Boundaries between various components, operations and data stores are somewhat arbitrary, and particular operations are illustrated in the context of specific illustrative configurations. Other allocations of functionality are envisioned and may fall within the scope of claims that follow. Finally, structures and functionality presented as discrete components in the example configurations may be implemented as a combined structure or component. These and other variations, modifications, additions, and improvements may fall within the scope of embodiments as defined in the claims that follow.

## Claims

1. A computer-implemented method for object annotation, comprising:

   - receiving input data, wherein the input data include two-dimensional image data indicating at least one object in a scene;
   - outputting, based on the two-dimensional image data, at least one representation of the scene on a user interface;
   - receiving at least one user input, wherein the at least one user input indicates at least one three-dimensional bounding box annotating the at least one object in the scene;
   - determining a three-dimensional position and rotation of the at least one three-dimensional bounding box based on the user input and a three-dimensional reconstruction relating to the scene; and
   - generating labeled data based on the at least one user input, wherein the labeled data include information about the at least one three-dimensional bounding box annotating the at least one object in the scene.

2. A computer-implemented method of claim 1, wherein:

- the labeled data are configured as training data and/or evaluation data for object detection and tracking applications; and/or
- the labeled data are configured as training data and/or evaluation data for computer vision algorithms, in particular neural networks.

3. A computer-implemented method of claim 1 or 2, wherein:

- the three-dimensional reconstruction includes, or is, a three-dimensional surface reconstruction of the scene or a three-dimensional surface reconstruction of a ground of the scene; and/or
- the three-dimensional reconstruction relating to the scene models a static environment in which the at least one object is not included.

4. A computer-implemented method of any one of claims 1 to 3, wherein the input data further include at least one of:

- first camera information about at least one camera recording the two-dimensional image data, wherein the first camera information include a focal length and/or a principal point of the at least one camera;
- second camera information about the at least one camera recording the two-dimensional image data, wherein the second camera information include a six-dimensional pose of the at least one camera in the scene;
- third camera information about the at least one camera recording the two-dimensional image data, wherein the third camera information include distortion information.

5. A computer-implemented method of any one of claims 1 to 4, further including:

- estimating at least one initial three-dimensional bounding box using an algorithm, in particular wherein the at least one user input is related to the at least one initial three-dimensional bounding box.

6. A computer-implemented method of any one of claims 1 to 5, wherein the at least one user input includes a first coordinate and a second coordinate, particularly x- and y-coordinates, of the three-dimensional position of the three-dimensional bounding box, and wherein the method further includes:

- if the object moves on the ground, automatically calculating a third coordinate, particularly a z-coordinate, based on the first and second coordinates and the three-dimensional reconstruction; and
- if the object does not move on the ground, the at least one user input includes a third coordinate, particularly z-coordinate, of the three-dimensional position of the three-dimensional bounding box.

7. A computer-implemented method of any one of claims 1 to 6, wherein:

- if the object moves on the ground, the at least one user input indicates a rotation of the at least one object about an axis, and wherein the method further includes automatically calculating a three-dimensional rotation of the at least one object based on the rotation of the at least one object about the axis and the three-dimensional reconstruction; and
- if the object does not move on the ground, the at least one user input indicates a three-dimensional rotation of the at least one object.

8. A computer-implemented method of any one of claims 1 to 7, wherein the at least one user input further includes:

- one or more attributes related to the at least one object; and/or
- masking regions of the scene that do not need to be labeled.

9. A computer-implemented method of any one of claims 1 to 8, wherein the two-dimensional image data include a sequence of multiple frames of the scene, and wherein outputting at least one representation of the scene on a user interface includes:

- outputting at least one representation of a basic frame of the multiple frames using the user interface, wherein the at least one user input indicates at least one three-dimensional bounding box annotating the at least one object in the basic frame of the multiple frames;
- determining at least one tracking point on the at least one three-dimensional bounding box; and
- tracking the at least one tracking point across other frames of the multiple frames to determine three-dimensional bounding boxes in the other frames.

10. A computer-implemented method of any one of claims 1 to 9, wherein the at least one representation of the scene outputted on the user interface includes at least:

- a first view related to the scene, wherein the first view is configured to indicate the at least one three-dimensional bounding box in Cartesian space, particularly wherein the first view is a bird's eye view or a three-dimensional view; and
- a second view related to the scene, wherein the second view includes an image of the scene, particularly a two-dimensional image,
- optionally wherein the first view and the second view are chained, in particular through a camera pinhole model,
- optionally wherein the at least one user input relates to a zoom and/or panning in the first view and/or the second view.

11. A computer-implemented method of claim 10, wherein the at least one user input indicating the at least one three-dimensional bounding box annotating the at least one object is received:

- on the first view and/or the second view; and/or
- on a control panel separate from the first view and the second view.

12. A computer-implemented method of any one of claims 1 to 11, further including:

- performing one or more quality checks on the labeled data, in particular checking whether an out-of-distribution dimension is assigned to the at least one object and optionally outputting a warning an out-of-distribution dimension is assigned to the at least one object.

13. A computer program comprising instructions which, when the program is executed by a computer, cause the computer to carry out the method of any one of claims 1 to 12.

14. A computer-readable storage medium comprising instructions which, when the program is executed by a computer, cause the computer to carry out the method of any one of claims 1 to 12.

15. A data processing system for object annotation, comprising one or more processors configured to:

- receive input data, wherein the input data include two-dimensional image data indicating at least one object in a scene;
- output, based on the two-dimensional image data, at least one representation of the scene on a user interface;
- receive at least one user input, wherein the at least one user input indicates at least one three-dimensional bounding box annotating the at least one object in the scene;
- determine a three-dimensional position and rotation of the at least one three-dimensional bounding box based on the user input and a three-dimensional reconstruction relating to the scene; and
- generate labeled data based on the at least one user input, wherein the labeled data include information about the at least one three-dimensional bounding box annotating the at least one object in the scene.

**Fig. 1**

# Fig. 2

<u>200</u>

```
┌─────────────────────────────────────────┐
│   receiving input data, wherein the input data   │
│   include two-dimensional image data indicating  │ ──── 210
│         at least one object in a scene           │
└─────────────────────────────────────────┘
                      │
                      ▼
┌─────────────────────────────────────────┐
│   outputting, based on the two-dimensional image │
│   data, at least one representation of the scene on │ ──── 220
│                 a user interface                 │
└─────────────────────────────────────────┘
                      │
                      ▼
┌─────────────────────────────────────────┐
│     receiving at least one user input, wherein the   │
│      at least one user input indicates at least one  │
│      three-dimensional bounding box annotating      │ ──── 230
│         the at least one object in the scene        │
└─────────────────────────────────────────┘
                      │
                      ▼
┌─────────────────────────────────────────┐
│   determining a three-dimensional rotation and    │
│   position of the at least one three-dimensional   │
│   bounding box based on the user input and a       │ ──── 240
│   three-dimensional reconstruction relating to     │
│                   the scene                      │
└─────────────────────────────────────────┘
                      │
                      ▼
┌─────────────────────────────────────────┐
│   generating labelled data based on the at least   │
│     one user input, wherein the labelled data      │
│       include information about the at least one    │ ──── 250
│   three-dimensional bounding box annotating the    │
│         at least one object in the scene           │
└─────────────────────────────────────────┘
```

## Fig. 3

(a)                                                          (b)

EP 4 589 548 A1

Fig. 4
(a)
(b)

# Fig. 5A

# Fig. 5B

**Fig. 6**

## Fig. 7

EP 4 589 548 A1

Europäisches
Patentamt

European
Patent Office

Office européen
des brevets

# EUROPEAN SEARCH REPORT

**Application Number**

EP 24 00 0009

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/092291 A1 (LAI WEI-LIANG [US] ET AL) 24 March 2022 (2022-03-24)<br>* paragraph [0005] – paragraph [0006] *<br>* paragraph [0030] *<br>* paragraph [0037] – paragraph [0038] *<br>* paragraph [0051] – paragraph [0056] *<br>* paragraph [0058] *<br>* paragraph [0066] *<br>* figures 4A, 4B, 7, 8, 9 *<br>----- | 1,2,4,8,13-15 | INV.<br>G06V10/22<br>G06V10/774<br>G06V10/778<br>G06V10/94<br>G06V20/10<br>G06V20/64<br>G06V20/70<br>G06F3/048<br>G06T7/11 |
| X | US 10 169 680 B1 (SACHDEVA PRATEEK [US] ET AL) 1 January 2019 (2019-01-01)<br>* column 8, last paragraph *<br>* column 28, line 33 – line 59 *<br>* column 29, line 1 – line 2 *<br>* column 29, line 34 – line 38 *<br>* column 30, line 43 – line 67 *<br>* column 31, line 10 – line 13 *<br>* column 31, line 27 – line 46 *<br>* column 31, line 52 – column 32, line 9 *<br>* column 32, line 48 – line 58 *<br>* column 35, line 29 – line 36 *<br>* column 65, line 3 – line 31 *<br>* figures 5A, 5B, 5F, 5G *<br>----- | 1-3,5-7,12-15 | |
| X | WO 2021/013790 A1 (FIVE AI LTD [GB]) 28 January 2021 (2021-01-28)<br>* page 19, line 13 – line 14 *<br>* page 23, line 22 – line 26 *<br>* page 32, line 13 – line 20 *<br>* page 37, line 4 – line 24 *<br>* page 37, line 17 – line 19 *<br>* claims 42, 43 *<br>* figures 3, 8A-8E, 11A, 11B,11D *<br>----- | 1-4,6,7,9-15 | TECHNICAL FIELDS SEARCHED (IPC)<br><br>G06V<br>G06T<br>G06F |

The present search report has been drawn up for all claims

| Place of search | Date of completion of the search | Examiner |
|---|---|---|
| The Hague | 9 April 2024 | Moreno, Marta |

EPO FORM 1503 03.82 (P04C01)

# EP 4 589 548 A1

## ANNEX TO THE EUROPEAN SEARCH REPORT
## ON EUROPEAN PATENT APPLICATION NO.

EP 24 00 0009

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2024

| Patent document cited in search report | | | Publication date | Patent family member(s) | | | Publication date |
|---|---|---|---|---|---|---|---|
| US 2022092291 | A1 | | 24-03-2022 | CN | 116420096 | A | 11-07-2023 |
| | | | | EP | 4217763 | A1 | 02-08-2023 |
| | | | | US | 2022092291 | A1 | 24-03-2022 |
| | | | | WO | 2022066547 | A1 | 31-03-2022 |
| US 10169680 | B1 | | 01-01-2019 | US | 10169678 | B1 | 01-01-2019 |
| | | | | US | 10169680 | B1 | 01-01-2019 |
| | | | | US | 10175697 | B1 | 08-01-2019 |
| | | | | US | 10275689 | B1 | 30-04-2019 |
| | | | | US | 2019197778 | A1 | 27-06-2019 |
| WO 2021013790 | A1 | | 28-01-2021 | CN | 114365195 | A | 15-04-2022 |
| | | | | CN | 114365200 | A | 15-04-2022 |
| | | | | CN | 114365201 | A | 15-04-2022 |
| | | | | CN | 114424250 | A | 29-04-2022 |
| | | | | EP | 3970066 | A1 | 23-03-2022 |
| | | | | EP | 3970067 | A1 | 23-03-2022 |
| | | | | EP | 3970068 | A1 | 23-03-2022 |
| | | | | EP | 3970122 | A1 | 23-03-2022 |
| | | | | US | 2022262100 | A1 | 18-08-2022 |
| | | | | US | 2022277515 | A1 | 01-09-2022 |
| | | | | US | 2022284666 | A1 | 08-09-2022 |
| | | | | US | 2022319043 | A1 | 06-10-2022 |
| | | | | WO | 2021013790 | A1 | 28-01-2021 |
| | | | | WO | 2021013791 | A1 | 28-01-2021 |
| | | | | WO | 2021013792 | A1 | 28-01-2021 |
| | | | | WO | 2021013793 | A1 | 28-01-2021 |

EPO FORM P0459

For more details about this annex : see Official Journal of the European Patent Office, No. 12/82